Europäisches Patentamt

European Patent Office

Office européen des brevets

(19)

(11) Numéro de publication : **0 026 115**
**B1**

(12)

# FASCICULE DE BREVET EUROPÉEN

(45) Date de publication du fascicule du brevet :
04.07.84

(51) Int. Cl.³ : **F 16 H 39/44**

(21) Numéro de dépôt : **80400366.3**

(22) Date de dépôt : **18.03.80**

(54) **Transmissions hydrostatiques de puissance à grande plage de fonctionnement.**

(30) Priorité : 06.09.79 FR 7922265

(43) Date de publication de la demande :
01.04.81 Bulletin 81/13

(45) Mention de la délivrance du brevet :
04.07.84 Bulletin 84/27

(84) Etats contractants désignés :
**CH DE GB SE**

(56) Documents cités :
**DE-A- 2 555 716**
**US-A- 3 038 312**
**US-A- 3 074 296**
**US-A- 3 092 970**
**US-E-    28 324**

(73) Titulaire : **ETAT-FRANCAIS représenté par le DELE-
GUE GENERAL POUR L'ARMEMENT
Bureau des Brevets et Inventions de la Délégation
Générale pour l'Armement 14, rue Saint-Dominique
F-75997 Paris Armées (FR)**

(72) Inventeur : **Marchand, Daniel
8, rue du Beau Soleil
F-49000 Angers (FR)**
Inventeur : **Morize, Alain ·
68, rue Albert Camus
F-49460 Montreuil-Juigne (FR)**

Jouve, 18, rue St-Denis, 75001 Paris, France

## Description

La présente invention concerne le secteur technique des transmissions hydrostatiques de puissance et plus particulièrement des transmissions hydrostatiques adaptées à des véhicules lourds à roues ou à chenilles.

Dans ce domaine des transmissions hydrostatiques de puissance, il est connu d'utiliser des moteurs hydrauliques à cylindrée variable pour faire varier la vitesse du véhicule par réduction de la cylindrée du récepteur sans augmenter le débit d'huile délivré par le générateur.

Cette utilisation de moteurs à cylindrée variable, très séduisante sur le plan hydraulique, présente néanmoins des limitations. En effet pour conserver un rendement correct, dans ce genre de transmissions, il est déconseillé d'utiliser le moteur à cylindrée variable dans une gamme de cylindrée inférieure au tiers de la valeur de la cylindrée maximale.

Cette utilisation dans une plage limitée de cylindrée ne permet pas toujours d'obtenir une gamme complète de couples et de vitesses. Pour obtenir celles-ci on est alors obligé d'utiliser un rapport de boîte important et donc d'augmenter le nombre des moteurs hydrauliques employés ou d'utiliser des moteurs de plus grande capacité ou même encore d'utiliser un réducteur de vitesse à deux ou plusieurs rapports.

C'est le cas du dispositif divulgué par le DE-A-2 555 716 dans lequel on montre un moteur thermique entraînant mécaniquement une pompe à cylindrée fixe et une pompe à cylindrée variable elle-même liée par une liaison débrayable à une seconde pompe à cylindrée fixe, ce dispositif ne permettant d'obtenir qu'un gavage plus ou moins important du moteur à cylindrée fixe.

Le but de l'invention est de fournir un dispositif permettant d'obvier les inconvénients précités en couvrant la gamme des vitesses et des couples exigés pour la propulsion d'un véhicule lourd, sans discontinuité de vitesse pour un même rapport de boîte, tout en utilisant un nombre ou un dimensionnement d'éléments hydraulique inférieur au nombre ou au dimensionnement nécessaire en configuration classique.

Un autre but de l'invention est d'accroître la puissance apparente de la transmission, ainsi que de permettre l'utilisation en récepteur à cylindrée variable de certains moteurs à cylindrée fixes intéressants par leurs caractéristiques couple et vitesse mais dont l'emploi n'avait pu être envisagé sur des véhicules mobiles en raison précisément de la fixité de la cylindrée.

L'objet de l'invention est donc un récepteur hydraulique à cylindrée variable, comprenant au moins un moteur à cylindrée fixe alimenté par un circuit de distribution de fluide incluant au moins une pompe, celle-ci étant entraînée par un générateur de puissance et comportant des moyens hydrauliques de variation uniforme du couple et de la vitesse du récepteur, liés à la pompe par un second moyen mécanique, muni d'un second moyen d'embrayage caractérisé en ce que les moyens hydrauliques de variation uniforme du couple et de la vitesse du récepteur sont liés au moteur à cylindrée fixe par un premier moyen mécanique comportant des premiers moyens d'embrayage, les premiers et les seconds moyens d'embrayage permettant de désaccoupler respectivement la pompe ou le moteur à cylindrée fixe des moyens hydrauliques de variation du couple et de la vitesse.

Selon un mode de réalisation, les moyens hydrauliques de variation du couple et de la vitesse sont constitués par au moins un moteur-pompe à cylindrée variable et par des moyens de commande de la cylindrée permettant le fonctionnement continu du moteur-pompe depuis la cylindrée maximale de fonctionnement en pompe jusqu'à la cylindrée maximale de fonctionnement en moteur, et réciproquement.

Selon ce même mode de réalisation, le circuit de distribution comprenant la pompe, se divise en deux branches liant en parallèle le moteur à cylindrée fixe et le moteur-pompe à cylindrée variable.

De plus, le moyen de liaison mécanique entre le moteur à cylindrée fixe et le moteur-pompe à cylindrée variable peut être réalisé de façon avantageuse au moyen d'un arbre de transmission.

En outre, le premier moyen de liaison mécanique peut comprendre de façon intéressante un réducteur à au moins un rapport de réduction.

Dans une première variante de réalisation préférée car elle offre l'avantage d'obtenir un bon rendement à haute vitesse, lorsque le moteur-pompe à cylindrée variable fonctionne en moteur, les premiers moyens d'embrayage sont en position embrayée, les seconds moyens d'embrayage étant alors en position débrayée, tandis que lorsque le moteur-pompe à cylindrée variable fonctionne en pompe, les premiers moyens d'embrayage sont en position débrayée, les seconds moyens d'embrayage étant alors en position embrayée.

Le récepteur selon l'invention comporte des moyens réalisant la commande de chacun des embrayages lorsque la cylindrée du moteur-pompe a été rendue voisine de la cylindrée nulle par des moyens de variation de cylindrée.

Selon une seconde variante de réalisation, le récepteur comporte des moyens de commande des embrayages permettant le fonctionnement simultané des premiers et des seconds moyens d'embrayage en position embrayée ou en position débrayée.

Pour les deux variantes de réalisation, les moyens de variation de cylindrée du moteur-pompe à cylindrée variable sont constitués par une régulation tachymétrique du moteur-pompe asservie à la vitesse du récepteur.

L'invention a également pour objet une transmission hydraulique pour véhicule à roues ou à chenilles équipé d'un moteur thermique dont la caractéristique est d'utiliser un nombre pair de récepteurs hydrauliques tels que définis ci-dessus, chacun de ces récepteurs entraînant en rotation une roue ou le barbotin d'une chenille, la pompe de chaque récepteur étant entraînée en rotation par le moteur thermique au moyen d'un train réducteur.

L'invention sera mieux comprise, à la lumière de la description suivante, en rapport avec les dessins annexés, illustrant de façon non limitative un mode de réalisation.

Sur les planches, sont représentés de façon schématique :

à la figure 1, le dispositif selon l'invention dans son mode de fonctionnement à fort couple,

à la figure 2, le même dispositif dans son mode de fonctionnement à grande vitesse,

à la figure 3, un exemple non limitatif d'application du dispositif selon l'invention au cas d'un véhicule à chenilles pour lequel deux récepteurs hydrauliques selon l'invention sont montés de façon symétrique pour entraîner chacune une chenille 13 du véhicule.

Le récepteur selon l'invention comprend un moteur à cylindrée fixe 1 alimenté en fluide par au moins une pompe 2 entraînée mécaniquement au moyen d'un arbre 4 par un générateur de puissance 3. La pompe 2 alimente en parallèle sur le moteur 1, des moyens hydrauliques de variation du couple et de la vitesse du récepteur. Ceux-ci sont constitués par un moteur-pompe à cylindrée variable 5.

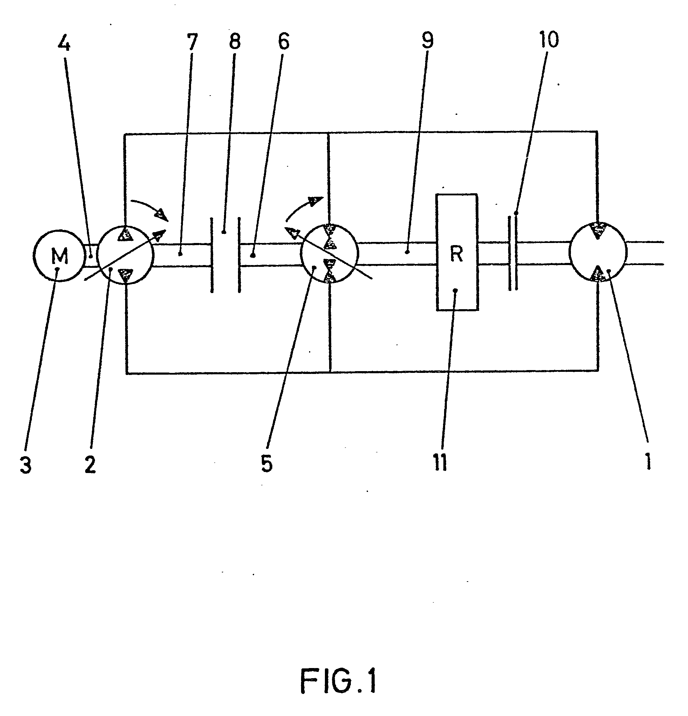

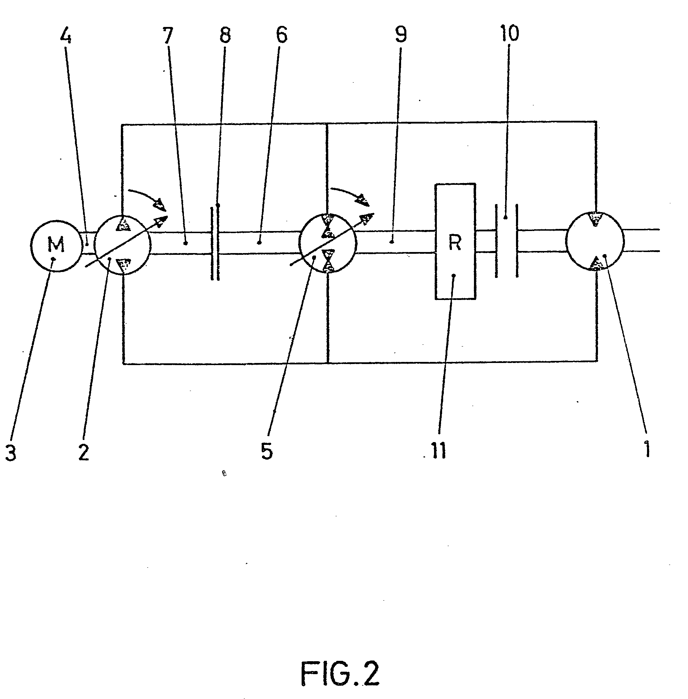

La pompe à cylindrée variable 2 peut être couplée au moteur-pompe 5 par l'intermédiaire d'un second moyen mécanique constitué de deux demi-arbres 6 et 7 qui peuvent être mis en prise l'un sur l'autre au moyen des seconds moyens d'embrayage représentés schématiquement en 8 (respectivement débrayés à la figure 1 et embrayée à la figure 2).

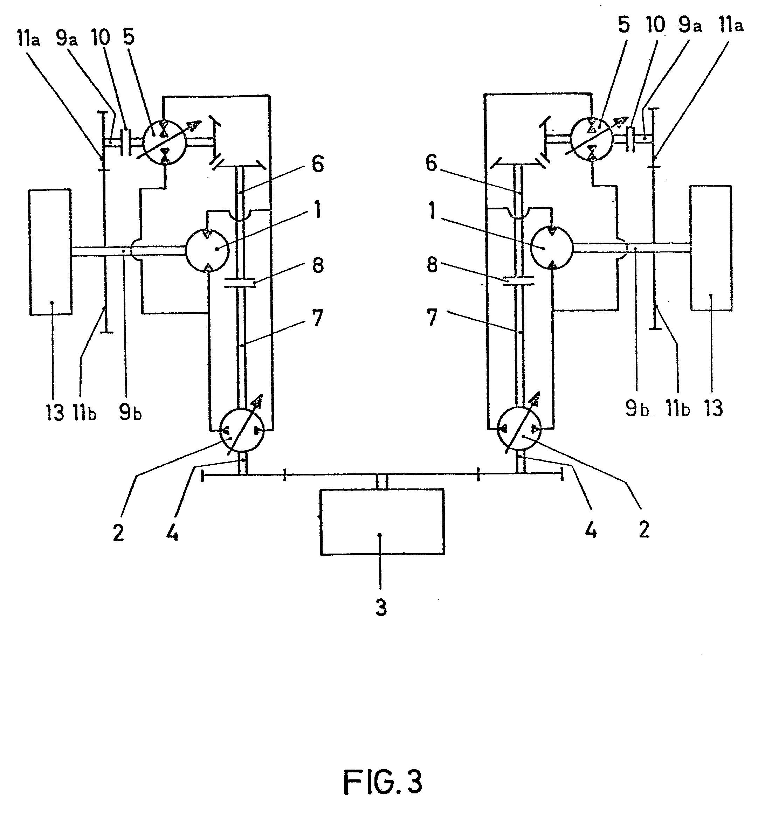

Les premiers moyens mécaniques 9 sont représentés schématiquement par un arbre de transmission portant un réducteur 11, cette disposition pouvant être réalisée en pratique ainsi que le montre la figure 3 au moyen de deux arbres 9a et 9b reliés par deux engrenages 11a et 11b formant le réducteur 11, l'arbre 9a portant l'embrayage 10.

Le dispositif selon l'invention comporte également, bien que non représentés sur les figures, des moyens de variation de cylindrée de la pompe 2 et du moteur-pompe 5 ainsi que des moyens permettant la commande de chacun des embrayages lorsque la cylindrée du moteur-pompe est voisine de la cylindrée nulle. Les mêmes moyens de commande permettent l'embrayage ou le débrayage simultané des deux éléments 8 et 10 pour certaines applications particulières.

Lors du fonctionnement à fort couple illustré à la figure 1, le moteur-pompe 5 fonctionne en moteur et délivre du couple. Les moteurs 1 et 5, sont liés mécaniquement aux moyens de l'arbre 9, du réducteur 11 et de l'embrayage 10.

Pendant cette première phase de fonctionnement, la cylindrée du moteur-pompe est régulée tachymétriquement de la cylindrée maximale jusqu'à zéro et la vitesse du moteur variable 5 peut passer de zéro à la vitesse maximale de l'élément.

Lors du fonctionnement à grande vitesse, le moteur-pompe travaille en pompe et il est désolidarisé mécaniquement du moteur 1. A l'inverse, l'embrayage 8 est alors en position embrayée et le moteur-pompe 5 est entraîné directement par le moteur thermique.

La pompe 2 et le moteur-pompe 5 devenu pompe fournissent du débit au moteur à cylindrée fixe 1. La cylindrée est régulée tachymétriquement de 0 à la cylindrée maximale en fonctionnement pompe. Le débit dans le récepteur augmente ainsi et fait croître la vitesse du récepteur. A une cylindrée voisine de la cylindrée nulle du moteur-pompe 5 correspond le débrayage de l'élément 10 et l'embrayage de l'élément 8. Toutefois pour certaines applications, le moyen de commande des embrayages 8 et 10 permet de lier mécaniquement tous les éléments de façon à passer toute la puissance directement par la mécanique, les composants hydrauliques étant alors transparents. On utilisera cette configuration lors d'un fonctionnement du véhicule en vitesse stabilisée, par exemple sur route ou autoroute.

Dans le cas de l'utilisation en ville du véhicule, on pourra par exemple désolidariser le moteur-pompe et la transmission fonctionnera de façon hydrostatique sur une plage réduite de vitesse et de couple.

Sans sortir du cadre de l'invention, on pourra modifier le nombre de chacun des éléments hydrauliques selon la puissance totale à transmettre par le récepteur. De même, tout type d'embrayage ou de moyens de commande de la variation de la cylindrée des éléments variables pourra être utilisé.

Dans le cas particulier d'utilisation où les deux embrayages 8 et 10 sont alternativement embrayés, le fonctionnement est alors le suivant, explicité par un exemple précis de réalisation.

Dans son fonctionnement à fort couple, le moteur 5 à cylindrée variable du récepteur fonctionne en moteur et absorbe une partie du débit q de sortie de la pompe 4. Le moteur 5 fournit alors du couple au récepteur. Ainsi le couple du récepteur sera la somme du couple fourni par le moteur à cylindrée fixe et de celui du moteur à cylindrée variable à la sortie du réducteur.

La vitesse de sortie du réducteur sera alors réduite, et sera égale au quotient du débit de sortie de pompe q sur la cylindrée du récepteur, celle-ci étant égale à :
— (cylindrée du moteur variable × rapport de réduction + cylindrée moteur fixe).

En fonctionnement à grande vitesse, le moteur-pompe 5 à cylindrée variable du récepteur fonctionne en pompe et débite une partie de fluide s'ajoutant au débit de la pompe pour alimenter le moteur 1 à cylindrée fixe. Ainsi le moteur-pompe 5 absorbe du couple et, fournissant du débit au moteur 1, augmente la vitesse de rotation du récepteur.

La vitesse maximale est alors égale, compte tenu des rendements, à 663 tr/mn pour une pression de fluide en sortie de pompe de 150 bars, le couple de sortie étant de 586 m · daN.

Entre ces deux points extrêmes, les variations du couple et de la vitesse sont effectuées de façon continue en faisant varier la cylindrée du récepteur variable ou le débit de fluide fourni au moteur 1 à cylindrée fixe.

Ainsi par réduction de la cylindrée du moteur-pompe 5 à cylindrée variable au moyen de sa régulation tachymétrique jusqu'à la rendre nulle, on fait passer la cylindrée du récepteur de sa valeur maximale jusqu'à la valeur de cylindrée du moteur fixe 1.

La vitesse N, de rotation de l'arbre de sortie ainsi obtenue dans cette plage de fonctionnement est égale au quotient du débit de la pompe sur la cylindrée du moteur fixe.

L'autre mode de variation qui entre également en jeu est obtenu par augmentation du débit fourni au moteur à cylindrée fixe 1 par le moteur-pompe à cylindrée variable fonctionnant en pompe.

Par ces divers modes de fonctionnement combinés entre le point de fonctionnement couple maximal-vitesse minimale et le point de vitesse maximale-couple minimal, on a donc obtenu une variation uniforme des vitesses et des couples de sortie, ceci pour un seul rapport de réduction mécanique.

A la figure 3 on a montré l'application de l'invention à une transmission complète pour véhicule à roue ou à chenille. La transmission comprend alors deux récepteurs hydrauliques tels que décrits plus haut montés de façon symétrique et entraînant chacun une roue 13 (ou un barbotin de chenille).

Dans l'exemple représenté, le premier moyen de liaison mécanique 9 comprend deux arbres 9a et 9b liés par un engrenage 11a, 11b constituant le réducteur 11, l'arbre 9b entraînant la roue ou le barbotin 13.

L'invention a donc pour avantage un meilleur fonctionnement du véhicule sur lequel ces récepteurs sont montés ainsi qu'une diminution importante de poids due à la simplification de la boîte mécanique de vitesse associée.

Un autre avantage de l'invention est de fournir une transmission simple, de faible encombrement et qui permet de bénéficier sur un véhicule des forts couples disponibles au moyen de moteurs à cylindrée fixe tout en bénéficiant de la souplesse d'emploi des moteurs à cylindrée variable, et d'un rendement largement augmenté aux hautes vitesses des véhicules.

L'invention est donc applicable à tous les véhicules à roues ou à chenilles de forte puissance pour lesquels des impératifs de poids et de volume stricts sont imposés et qui nécessitent un fonctionnement sans-à-coups.

## Revendications

1. Récepteur hydraulique à cylindrée variable, comprenant au moins un moteur à cylindrée fixe (1) alimenté par un circuit de fluide incluant au moins une pompe (2), celle-ci étant entraînée par un générateur de puissance (3), et comportant des moyens hydrauliques (5) de variation uniforme du couple et de la vitesse du récepteur, liés à la pompe (1) par un second moyen mécanique muni d'un second moyen d'embrayage (8) caractérisé en ce que les moyens hydrauliques (5) de variation uniforme du couple et de la vitesse du récepteur sont liés au moteur à cylindrée fixe (1) par un premier moyen mécanique (9) comportant des premiers moyens (10) d'embrayage, les premiers et les seconds moyens d'embrayage permettant de désaccoupler respectivement la pompe (2) ou le moteur à cylindrée fixe (1) des moyens hydrauliques (5) de variation du couple et de la vitesse.

2. Récepteur hydraulique selon la revendication 1, caractérisé en ce que les moyens de variation uniforme du couple et de la vitesse du récepteur sont constitués par au moins un moteur-pompe à cylindrée variable (5) et par des moyens de variation de la cylindrée de ce dernier, permettant le fonctionnement continu du moteur-pompe depuis la cylindrée maximale en fonctionnement pompe jusqu'à la cylindrée maximale en fonctionnement moteur.

3. Récepteur hydraulique à cylindrée variable selon l'une quelconque des revendications 1 ou 2, caractérisé en ce que le circuit de fluide comprenant la pompe (2), se divise en deux branches liant en parallèle le moteur à cylindrée fixe (1) et le moteur-pompe à cylindrée variable (5).

4. Récepteur hydraulique à cylindrée variable selon l'une quelconque des revendications 1 à 3, caractérisé en ce que le premier moyen de liaison mécanique (9) comprend un réducteur (11) à au moins un rapport de réduction.

5. Récepteur hydraulique selon l'une quelconque des revendications 1 à 4, caractérisé en ce que lorsque le moteur-pompe à cylindrée variable (5) fonctionne en moteur, les premiers moyens d'embrayage (10) sont en position embrayée, les seconds moyens d'embrayage (8) étant alors en position débrayée.

6. Récepteur hydraulique selon l'une quelconque des revendications 1 à 4, caractérisé en ce que, lorsque le moteur-pompe à cylindrée variable (5) fonctionne en pompe, les premiers moyens d'embrayage (10) sont en position débrayée, les seconds moyens (8) étant alors en position embrayée.

7. Récepteur hydraulique selon l'une quelconque des revendications 1 à 6, caractérisé en ce qu'il comporte des moyens réalisant la commande de chacun des embrayages lorsque la cylindrée du moteur-pompe a été rendue voisine de la cylindrée nulle par les moyens de variation de cylindrée.

8. Récepteur hydraulique selon l'une quelconque des revendications 1 à 4, caractérisé en ce qu'il comporte des moyens de commande des embrayages permettant le fonctionnement simultané des premiers et des seconds moyens d'embrayage (10, 8) en position embrayée ou en position débrayée.

9. Récepteur hydraulique selon l'une quelconque des revendications 2 à 8 caractérisé en ce que les moyens de variation de cylindrée du moteur-pompe à cylindrée variable (5) sont constitués par une régulation tachymétrique du moteur-pompe asservie à la vitesse du récepteur.

10. Transmission hydraulique pour véhicule à roues ou à chenilles équipé d'un moteur thermique, caractérisé en ce qu'elle comprend un nombre pair de récepteurs hydrauliques selon l'une quelconque des revendications 1 à 9, chacun de ces récepteurs entraînant en rotation une roue ou le barbotin d'une chenille, la pompe de chaque récepteur étant entraînée en rotation par le moteur thermique au moyen d'un train réducteur.

## Claims

1. Variable displacement pump, comprising at least one fixed displacement motor (1) supplied by a fluid system including at least one pump (2), the latter being driven by a power generator (3), and comprising hydraulic means (5) for linear variation of the torque and speed of the motor connected to the pump (2) by a secondary mechanism equipped with a secondary clutch (8), wherein the hydraulic means for linear variation of the torque and speed of the motor are connected to the fixed displacement motor (1) by a primary mechanism (9) comprising primary clutching devices (10), the primary and secondary clutching devices permitting respective disconnection of the pump (2) or fixed displacement motor (1) from the hydraulic torque and speed variation means (5).

2. Hydraulic motor set forth in claim 1, wherein the means for linear variation of the torque and speed of the motor comprise at least one variable displacement motor-pump (5) and displacement variation means for the latter, permitting continuous operation of the motor-pump from maximum displacement in pump operation to maximum displacement in motor operation.

3. Variable displacement pump set forth in either claim 1 or 2, wherein the fluid system comprising the pump (2) is divided into two lines parallel connecting the fixed displacement motor (1) and the variable displacement motor-pump (5).

4. Variable displacement pump set forth in claims from 1 to 3, wherein the primary mechanism (9) comprises a reducer (11) with at least one reduction ratio.

5. Hydraulic motor set forth in either of the claims from 1 to 4, wherein, while the motor operates in the variable displacement motor-pump, the primary clutching devices (10) are engaged and the secondary clutching devices (8) disengaged.

6. Hydraulic motor set forth in either of the claims from 1 to 4, wherein, while the pump operates in the variable displacement motor-pump (5), the primary clutching devices (10) are disengaged and the secondary clutching devices (8) engaged.

7. Hydraulic pump set forth in either of the claims from 1 to 6, wherein each of the clutching devices are actuated when the motor-pump displacement has been brought down to nil displacement by displacement variation means.

8. Hydraulic motor set forth in either of the claims from 1 to 4, wherein clutching control mechanisms permit simultaneous operation of the primary and secondary clutching devices (10, 8) in engaged or disengaged position.

9. Hydraulic motor set forth in either of the claims from 2 to 8, wherein the displacement variation means of the variable displacement pump (5) consist in regulating the speed of the motor-pump slaved to the pump speed.

10. Hydraulic transmission for wheeled or tracked vehicles equipped with internal combustion engines, wherein the former comprises an even number of hydraulic motors in accordance with either of the claims from 1 to 9, each of these motors driving a wheel or sprocket, the pump of each motor being driven by the internal combustion engine by means of a reduction gear.

## Ansprüche

1. Hydraulischer Empfänger von regelbarem Hubraum mit mindestens einem Motor (1) mit festem Hubraum, der von einem mindestens eine durch einen Leistungserzeuger (3) angetriebene Pumpe (2) beinhaltenden Mediumkreislauf versorgt wird, und mit hydraulischen Regelungsmitteln (5) zur gleichförmigen Regelung von Drehmoment und Drehzahl des Empfängers, die über einem zweiten mechanischen, mit einem zweiten Einrückmittel (8) versehenen Mittel mit Pumpe (2) verbunden sind, dadurch gekennzeichnet, dass die hydraulischen Mittel (5) zur gleichförmigen Regelung von Drehmoment und Drehzahl des Empfängers mit dem Motor (1) mit festem Hubraum über einem ersten mechanischen, erste Einrückmittel (10) umfassenden Mittel (9) verbunden sind, wobei durch die ersten und zweiten Einrückmittel Pumpe (2) bzw. Motor (1) mit festem Hubraum von den hydraulischen Mitteln (5) zur gleichförmigen Regelung von Drehmoment und Drehzahl entkuppelt werden kann.

2. Hydraulischer Empfänger nach Anspruch 1, dadurch gekennzeichnet, dass die Mittel zur gleichförmigen Drehmoment- und Drehzahlregelung des Empfängers durch mindestens eine Motorpumpe (5) und durch Regelungsmittel des Hubraumes derselben gebildet sind, sodass eine stufenlose Funktion der Motorpumpe vom höchstmöglichen Hubraum im Pumpenbetrieb bis zum höchstmöglichen Hubraum im Motorbetrieb ermöglicht wird.

3. Hydraulischer Empfänger mit regelbarem Hubraum nach Anspruch 1 oder 2, dadurch gekennzeichnet, dass der Pumpe (2) beinhaltende Mediumkreislauf sich in zwei Motor (1) mit festem Hubraum und Motorpumpe (5) mit regelbarem Hubraum parallelschaltenden Abzweigungen teilt.

4. Hydraulischer Empfänger mit regelbarem Hubraum nach einem der Ansprüche 1 bis 3, dadurch gekennzeichnet, dass das erste mechanische Verbindungsmittel (9) ein Reduzierglied (11) mit mindestens einem Untersetzungsverhältnis umfasst.

5. Hydraulischer Empfänger nach einem der Ansprüche 1 bis 4, dadurch gekennzeichnet, dass bei motorischem Betrieb der Motorpumpe (5) mit regelbarem Hubraum die ersten Einrückmittel (10) in eingerückter Stellung eingestellt sind, wobei dann die zweiten Einrückmittel (8) in ausgerückter Stellung stehen.

6. Hydraulischer Empfänger nach einem der Ansprüche 1 bis 4, dadurch gekennzeichnet, dass bei Pumpenbetrieb der Motorpumpe (5) mit regelbarem Hubraum die ersten Einrückmittel (10) in ausgerückter Stellung gestellt sind, wobei dann die zweiten Mittel (8) in eingerückter Stellung stehen.

7. Hydraulischer Empfänger nach einem der vorstehenden Ansprüche 1 bis 6, dadurch gekennzeichnet, dass dieser jeweils die Steuerung der einzelnen Einrückungen dann wahrnehmende Mittel beinhaltet, wenn der Hubraum der Motorpumpe durch die Hubraumregelungsmittel auf einen dem nullwertigen Hubraum benachbarten Wert gebracht wurde.

8. Hydraulischer Empfänger nach einem der vorstehenden Ansprüche 1 bis 4, dadurch gekennzeichnet, dass dieser eine gleichzeitige Betätigung der ersten und der zweiten Einrückmittel (10, 8) in eine eingerückte, bzw. ausgerückte Stellung ermöglichende Kupplungssteuermittel beinhaltet.

9. Hydraulischer Empfänger nach einem der vorstehenden Ansprüche 2 bis 8, dadurch gekennzeichnet, dass die Hubraumregelungsmittel der Motorpumpe (5) mit regelbarem Hubraum durch eine empfängerdrehzahlabhängige Geschwindigkeitsregelung der Motorpumpe gebildet sind.

10. Hydraulisches Getriebe für mit einer Wärmekraftmaschine ausgerüstetes Laufrad- oder Raupenfahrzeug, dadurch gekennzeichnet, dass es eine gerade Anzahl von hydraulischen Empfängern nach einem der vorstehenden Ansprüche 1 bis 9 umfasst, wobei diese Empfänger je ein Rad oder das Kettenrad einer Raupenkette antreiben und die Pumpe der einzelnen Empfänger jeweils durch die Wärmekraftmaschine mithilfe eines Untersetzungsgetriebes in Drehbewegung angetrieben wird.

FIG.1

FIG.2

2

FIG.3